# EUROPÄISCHE PATENTSCHRIFT

(11) **EP 3 344 890 B1**
(45) Veröffentlichungstag und Bekanntmachung des Hinweises auf die Patenterteilung: **09.10.2019**
(21) Anmeldenummer: 16750447.1
(22) Anmeldetag: 12.08.2016
(51) Int. Cl.: F16D 55/2265

(54) **SCHEIBENBREMSE FÜR EIN NUTZFAHRZEUG**
DISC BRAKE FOR A COMMERCIAL VEHICLE
FREIN À DISQUE POUR VÉHICULE UTILITAIRE

(30) Priorität: 31.08.2015 DE 102015114437
(43) Veröffentlichungstag der Anmeldung: 11.07.2018
(73) Patentinhaber: KNORR-BREMSE Systeme für Nutzfahrzeuge GmbH, 80809 München (DE)
(72) Erfinder: HACKLBERGER, Michael, 94127 Neuburg am Inn (DE); OFENBECK, Sandra, 94474 Aunkirchen (DE)
(86) Internationale Anmeldenummer: PCT/EP2016/069206
(87) Internationale Veröffentlichungsnummer: WO 2017/036764

(56) Entgegenhaltungen:
- DE-A1- 10 248 948
- DE-A1-102007 008 724
- DE-A1-102013 005 445

## Beschreibung

Die Erfindung betrifft eine Scheibenbremse für ein Nutzfahrzeug gemäß dem Oberbegriff des Anspruchs 1.

Ein als Schiebesattel ausgebildeter Bremssattel einer gattungsgemäßen Scheibenbremse ist mittels Befestigungselementen an einem fahrzeugseitigen, d. h. ortsfesten Bremsträger gehalten.

Die Befestigungselemente weisen Führungsholme auf, die am Bremsträger vorzugsweise durch Verschrauben befestigt und andererseits in Gleitlagern des Bremssattels so geführt sind, dass dieser, bezogen auf eine an einer Achse des Fahrzeugs verdrehsicher gehaltene Bremsscheibe, axial verschiebbar ist.

Eines der Gleitlager ist als Festlager mit geringem Gleitspiel ausgebildet und dient in der Hauptsache der axialen Führung des Bremssattels, wobei das Lagerspiel so gering wie möglich gehalten ist.

Das andere Gleitlager hingegen weist funktionsbedingt ein größeres Lagerspiel auf, da neben der axialen Führung auch ein Toleranzausgleich sowie thermisch bedingte Ausdehnungen des Bremssattels berücksichtigt werden müssen.

Allerdings können aufgrund des größeren Lagerspiels im Fahrbetrieb Klappergeräusche entstehen, zu deren Verhinderung bzw. Dämpfung bei der bekannten Scheibenbremse eine aus einem elastischen Kunststoff, insbesondere einem Elastomer bestehende Gleitbuchse Verwendung findet, in der der Führungsholm axial verschieblich gelagert ist.

Diese Gleitbuchse ist in einer Lagerhülse aus Metall, insbesondere aus Stahlblech, verschiebegesichert gehalten, die wiederum in eine Bohrung des Bremssattels eingepresst, also reibschlüssig darin gehalten ist, wobei die Gleitbuchse und die Lagerhülse Bestandteil einer Führungsbuchse sind.

Als weiteres Element der bekannten Führungsbuchse ist ein Anschlagring vorgesehen, der an einer Schulter der die Führungsbuchse aufnehmenden, in diesem Bereich stufigen Bohrung des Bremssattels anliegt und der zum einen die Gleitbuchse vor zu starken Stößen schützt und damit die Lebensdauer der Führungsbuchse insgesamt erhöht und zum anderen der Einschubbegrenzung beim Eindrücken der Führungsbuchse in die Bohrung dient.

Überdies wird durch den Anschlagring verhindert, dass die Führungsbuchse an der Bohrung des Bremssattels anschlägt und diese beschädigt.

Die sich notwendigerweise ergebenden separaten Bauteile stehen einer kostenoptimierten Herstellung und Montage entgegen, zumal der Anschlagring üblicherweise massiv aus Metall, insbesondere als Drehteil aus Stahl hergestellt ist.

Darüber hinaus ist ein relativ hoher Verschleiß der aus einem Elastomer bestehenden Gleitbuchse über die Laufzeit der Bremse zu beklagen, so dass die Standzeit insoweit nicht den an eine Kostenoptimierung gestellten Anforderungen entspricht.

In der DE 10 2013 005445 A1 ist eine Scheibenbremse nach der Gattung offenbart, bei der die Gleitbuchse des Loslagers als einstückiges Federelement ausgebildet ist.

Aus der DE 10 2007 008724 A1 ist eine Scheibenbremse bekannt, bei der das Festlager eine radial verformbare, sich am Führungsholm abstützende metallische Feder aufweist, die den Führungsholm umgreift.

Der Erfindung liegt die Aufgabe zugrunde, eine Scheibenbremse der gattungsgemäßen Art so weiterzuentwickeln, dass ihre Standzeit erhöht und die Herstellung und Montage einfacher und damit kostengünstiger wird.

Diese Aufgabe wird durch eine Scheibenbremse mit den Merkmalen des Anspruchs 1 gelöst.

Durch diese konstruktive Ausgestaltung ergeben sich eine ganze Reihe von Vorteilen sowohl hinsichtlich einer verbesserten Funktionalität wie auch hinsichtlich einer Kostenreduzierung im Bereich der Gleitlagerung.

Durch die Federhülse, die bevorzugt unlösbar mit der Gleitbuchse verbunden ist, liegt nun nicht mehr der aus einem Elastomer bestehende Kunststoffteil der Gleitbuchse an dem Führungsholm an, sondern die Federbügel der Federhülse.

Zum Ausgleich der fertigungsbedingten Toleranzen, wie er typisch ist für ein Loslager, erfolgt nun durch eine radiale Verformung der Federbügel, ebenso wie bei einer betriebsbedingten thermischen Ausdehnung des Bremssattels.

Die äußere Mantelfläche der Gleitbuchse hingegen wird im Wesentlichen durch den Kunststoff gebildet, so dass die dämpfenden Eigenschaften der Gleithülse, insbesondere um im Fahrbetrieb auftretende Klappergeräusche zu verhindern, uneingeschränkt erhalten bleiben.

Durch die Anlage der Federbügel der aus einem Federblech geformten Federhülse am Führungsholm, erhöht sich deutlich die Standzeit der Gleitbuchse aufgrund der höheren Abriebfestigkeit der Federbügel gegenüber einem Kunststoff.

Da ein verschleißbedingter Austausch der Gleitbuchse, wenn überhaupt, in wesentlich längeren Zeitabständen erforderlich wird, ergeben sich daraus deutlich reduzierte Betriebskosten, sowohl aus einer Ersatzbeschaffung wie auch aus dem geringeren Montage- bzw. Demontageaufwand, der Stillstandszeiten des Fahrzeuges einschließt.

Nach einer vorteilhaften Weiterbildung der Erfindung sind die über den Umfang abständig zueinander verteilten, sich in Längsachsrichtung der Federhülse erstreckenden Federbügel, die bevorzugt konvex nach innen gewölbt sind, an beiden Enden an Stützringen angeschlossen, die, wie nach einem weiteren Gedanken der Erfindung vorgesehen, bündig mit der Außenfläche des Kunststoffmantels verlaufen.

Damit übernehmen diese Stützringe die Funktion der zum Stand der Technik beschriebenen Lagerhülse aus Metall, durch die die Gleitbuchse insgesamt verschiebegesichert in der Bohrung des Bremssattels gehalten ist, wobei, vergleichbar der Lagerhülse, der Außendurchmesser der Stützringe im Verhältnis zum lichten Durchmesser der Bohrung, so gehalten ist, dass sich eine Presspassung ergibt, wodurch die Gleitbuchse reibschlüssig in der Bohrung gesichert ist.

Die Stützringe bilden bevorzugt die Endbereiche der Gleithülse, so dass einer der Stützringe den aus dem Stand der Technik bekannten Anschlagring bildet, der an einer Schulter der stufigen Bohrung des Bremssattels anliegt, insbesondere für eine Einschubbegrenzung der Gleitbuchse.

Naturgemäß führt dies sowohl zu einer einfachen und kostengünstigen Herstellung wie auch einer entsprechenden Montage.

Eine Senkung der Herstellungskosten wird auch dadurch erreicht, dass die Federhülse aus einem geeigneten Federblech gestanzt ist, das zunächst tafelförmig vorliegt, in die die Federbügel durch Ausstanzen von Fensteröffnungen hergestellt werden. Im Folgenden wird die Tafel zu einer im Querschnitt kreisförmigen Hülse geformt, deren einander zugewandte Kanten aneinander stoßen oder mit geringem Abstand zueinander positioniert sind, ebenso wie sie miteinander verbunden werden können, beispielsweise durch Verschweißen.

Dieses sozusagen Halbzeug wird anschließend derart mit dem Elastomer umspritzt, dass sich die Führungshülse entsprechend der Erfindung herausbildet.

Nach einem weiteren Gedanken der Erfindung weist die Führungshülse mehrere, vorzugsweise zwei hintereinander liegende Abschnitte mit Federbügeln auf, die jeweils an ihren beiden Enden an einem Stützring angeschlossen sind, so dass eine solche Führungshülse drei parallel und abständig zueinander angeordnete Stützringe besitzt.

Die innere Mantelfläche dieser Stützringe kann gegenüber der Innenfläche des Kunststoffteils zurückgesetzt, d.h. vertieft liegen, so dass sich eine umlaufende Nut ergibt, in der ein Schmiermittel deponiert werden kann, wobei allerdings, wie erwähnt, die Federbügel gegenüber dem Kunststoff vorstehen und zwar derart, dass diese Federbügel in radialer Richtung federnd sind. Ein Schmiermitteldepot wird aber auch durch die Absenkung der inneren Mantelfläche der Gleithülse gegenüber den Federbügeln gebildet.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
Figur 1 eine Scheibenbremse in einer schematischen Draufsicht
Figur 2 eine Einzelheit der Scheibenbremse aus dem Bereich des Loslagers, gemäß der Kennzeichnung "A" in Fig. 1 in einer perspektivischen Ansicht
Figur 3 ein Einzelteil der Einzelheit nach Fig. 2, gleichfalls perspektivisch abgebildet.

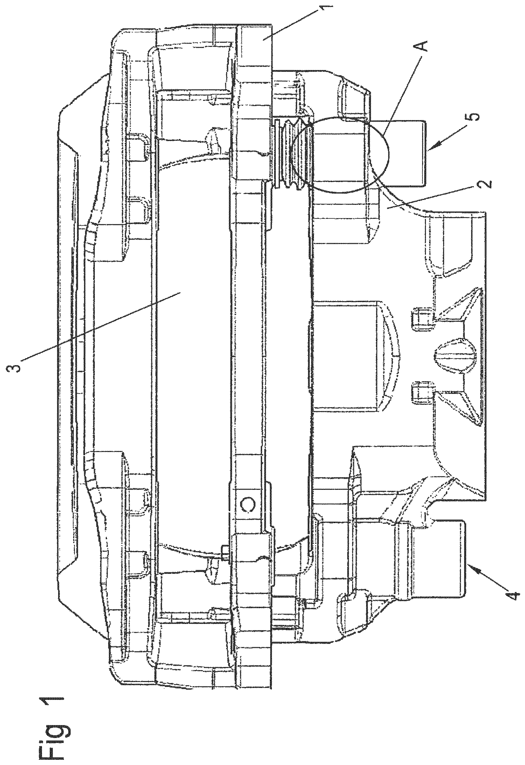

In der **Figur 1** ist eine Scheibenbremse für ein Nutzfahrzeug dargestellt, die in ihrem Grundaufbau einen Bremssattel 2 aufweist, der eine Bremsscheibe 3 übergreift, die an einer nicht dargestellten, im Betrieb rotierenden Achse des Nutzfahrzeuges verdrehsicher befestigt ist.

Der Bremssattel 2 ist an einem Bremsträger 1 des Nutzfahrzeuges, bezogen auf die Bremsscheibe 3, axial verschiebbar angeordnet.

Hierzu sind zwei Befestigungselemente vorgesehen, die jeweils einen mit dem Bremsträger 1 fest verbundenen, nicht dargestellten Führungsholm aufweisen, der mittels einer Schraube am Bremsträger 1 befestigt ist, wobei ein Befestigungselement als Festlager 4 und das andere als Loslager 5 ausgebildet ist.

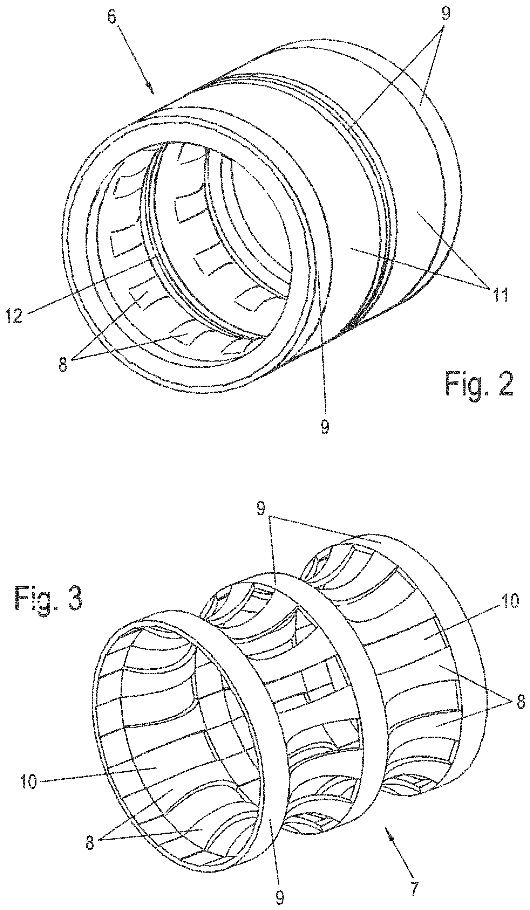

Zur Lagerung des Führungsholms, d.h. zur axialen Führung des Bremssattels 2 auf dem Führungsholm, weist das Loslager 5 eine in der **Figur 2** als Einzelheit dargestellte Führungsbuchse 6 auf, die verschiebegesichert im Bremssattel 2 gehalten ist.

Diese Führungsbuchse 6 besteht aus einer Gleitbuchse 11, die aus einem elastischen Kunststoff, vorzugsweise einem Elastomer, gebildet ist und einer darin gelagerten, in der **Figur 3** als Einzelteil dargestellten Federhülse 7.

Erfindungsgemäß weist die Federhülse 7 Federbügel 8 auf, die streifenförmig ausgebildet sind und sich in Längsachsrichtung der Führungsbuchse 6 erstrecken, wobei sie zum Innenraum hin konvex geformt ausgebildet sind.

Mehrere Federbügel 8 sind parallel und abständig zueinander über den Umfang verteilt, unter Bildung von Fensteröffnungen 10, die zum Teil der Aufnahme von Kunststoff dienen, wenn die Federhülse 7 zur Bildung der Gleitbuchse 11 umspritzt wird.

Dabei sind die Federbügel 8 so in den Kunststoff eingebettet, dass eine radiale federnde Auslenkung möglich ist.

Im dargestellten Beispiel sind zwei hintereinander angeordnete Abschnitte vorgesehen, die jeweils mit Federbügeln 8 versehen sind, wobei diese an ihren freien Enden an Stützringen 9 gehalten sind. D.h., im Beispiel sind drei Stützringe 9 ausgebildet, die, wie besonders deutlich in der Figur 2 zu erkennen ist, bündig mit der angrenzenden Mantelfläche der Gleitbuchse 11 verlaufen.

Denkbar ist allerdings auch, die Gleitbuchse 11 außenseitig gegenüber den Stützringen 9 geringfügig zurückgesetzt anzuordnen, so dass die Stützringe 9 an der Wand einer Bohrung des Bremssattels 2, die die Führungsbuchse 6 aufnimmt, reibschlüssig anliegen.

Die Federbügel 8 hingegen kontaktieren den Führungsholm, d.h., die Federbügel 8 liegen bäuchlings am Führungsholm an und dienen derart insbesondere zum Toleranzausgleich.

Wie insbesondere in der Figur 2 zu erkennen ist, liegt die innere Mantelfläche zumindest des mittleren Stützringes 9 gegenüber dem benachbarten Bereich der Gleitbuchse 11 zurückgesetzt, so dass eine umlaufende Nut 12 gebildet ist, in die ein Schmiermittel einbringbar ist.

Zumindest einer der äußeren Stützringe 9 liegt stirnseitig frei und bildet so einen Anschlagring, der sich in in den Bremssattel 2 eingeschobener Endstellung an einer Schulter der stufig ausgebildeten Bohrung des Bremssattels 2 abstützt.

Die Anzahl der gezeigten Abschnitte mit Federbügeln 8 ist beispielhaft zu sehen. Im Bedarfsfall können auch mehr als zwei Abschnitte oder weniger, d.h. lediglich ein Abschnitt vorgesehen sein, die im Übrigen, wie im Beispiel, einstückig ausgebildet sein können oder aus separaten Abschnitten bestehen.

### BEZUGSZEICHENLISTE

- 1: Bremsträger
- 2: Bremssattel
- 3: Bremsscheibe
- 4: Festlager
- 5: Loslager
- 6: Gleitbuchse
- 7: Federhülse
- 8: Federbügel
- 9: Stützring
- 10: Fensteröffnung
- 11: Kunststoffkörper
- 12: Nut

## Patentansprüche

1. Scheibenbremse für ein Nutzfahrzeug, mit einem eine Bremsscheibe (3) umfassenden Bremssattel (2), der mittels zweier Befestigungselemente, von denen eines als Festlager (4) und das andere als Loslager (5) ausgebildet ist, bezogen auf die Bremsscheibe (3) axial verschiebbar an einem ortsfesten Bremsträger (1) befestigt ist, wobei das Loslager (5) eine im Bremssattel (2) fest gehaltene Führungsbuchse (6) mit einer Gleitbuchse (11) aus einem Kunststoff, insbesondere einem Elastomer, aufweist, in der ein mit dem Bremsträger (1) verbundener Führungsholm längs verschiebbar geführt ist,
**dadurch gekennzeichnet, dass**
in der Gleitbuchse (11) eine Federhülse (7) gehalten ist, die sich in Längsachsrichtung erstreckende, über den Umfang abständig zueinander angeordnete Federbügel (8) aufweist, die den Führungsholm kontaktieren.

2. Scheibenbremse nach Anspruch 1,
**dadurch gekennzeichnet, dass**
die Gleitbuchse (11) an die Federhülse (7) angespritzt ist.

3. Scheibenbremse nach Anspruch 1 oder 2,
**dadurch gekennzeichnet, dass**
die Federbügel (8) radial frei auslenkbar sind.

4. Scheibenbremse nach einem der vorhergehenden Ansprüche,
**dadurch gekennzeichnet, dass**
die Federbügel (8) auf der dem Führungsholm zugewandten Seite konvex ausgebildet sind.

5. Scheibenbremse nach einem der vorhergehenden Ansprüche,
**dadurch gekennzeichnet, dass**
die Federbügel (8) an ihren beiden Enden an jeweils einen Stützring (9) angeschlossen sind.

6. Scheibenbremse nach Anspruch 5,
**dadurch gekennzeichnet, dass**
der Stützring (9) in seinem Außendurchmesser dem Außendurchmesser der Gleitbuchse (11) entspricht oder geringfügig größer ist.

7. Scheibenbremse nach Anspruch 1 oder 5,
**dadurch gekennzeichnet, dass**
die Federhülse (7) aus mehreren, über den Umfang verteilten und in Achsrichtung hintereinander angeordneten Federbügeln (8) besteht, wobei die in Achsrichtung hintereinander angeordneten Federbügel (8) durch einen gemeinsamen Stützring (9) miteinander verbunden sind.

8. Scheibenbremse nach einem der Ansprüche 5 bis 7,
**dadurch gekennzeichnet, dass**
der lichte Durchmesser eines zwischen den in Längsrichtung hintereinander liegenden Federbügeln (8) angeordneten Stützrings (9) größer ist als die benachbarte Gleitbuchse (11), unter Bildung einer Nut (12) zur Aufnahme eines Schmiermittels.

9. Scheibenbremse nach einem der vorhergehenden Ansprüche,
**dadurch gekennzeichnet, dass**
zwischen den umfänglich angeordneten Federbügeln (8) ausgebildeten Fensteröffnungen (10) mit Kunststoff der Gleitbuchse (11) ausgefüllt sind.

10. Scheibenbremse nach einem der vorhergehenden Ansprüche,
**dadurch gekennzeichnet, dass**
die Federhülse (7) einstückig als Stanzteil ausgebildet ist.

11. Scheibenbremse nach einem der vorhergehenden Ansprüche,
**dadurch gekennzeichnet, dass**
die Federhülse (7) aus Federblech besteht.

## Claims

1. A disc brake for a utility vehicle having a brake calliper (2) that encompasses a brake disc (3) and is fixed such that it is able to move axially in relation to the brake disc (3) by means of two fixing elements, one taking the form of a fixed bearing (4) and the other the form of a floating bearing (5), to a stationary brake carrier (1), the floating bearing (5) having a guide bush (6), which is held fast in the brake calliper (2), and a sliding bush (11) made of a plastic, in particular of an elastomer, in which a guide bar is connected to the brake carrier (1) is seated such that it is able to move longitudinally,
**characterised in that**
held in the sliding bush (11) is a spring sheath (7) that has spring braces (8) that extend in longitudinal direction, are positioned spaced around the periphery and make contact with the guide bar.

2. A disc brake according to claim 1,
**characterised in that**
the sliding bush (11) is sprayed onto the spring sheath (7).

3. A disc brake according to one of claims 1 or 2,
**characterised in that**
the spring braces (8) can be freely deflected radially.

4. A disc brake according to one of the preceding claims,
**characterised in that**
the spring braces (8) are formed convexly on side facing the guide bar.

5. A disc brake according to one of the preceding claims,
**characterised in that**
both ends of each of the spring braces (8) are connected to a supporting ring (9).

6. A disc brake according to claim 5,
**characterised in that**
the external diameter of the supporting ring (9) is the same as or slightly greater than the external diameter of the sliding bush (11).

7. A disc brake according to claim 1 or 5,
**characterised in that**
the spring sheath (7) consists of a plurality of spring braces (8) that are distributed around the periphery and arranged one behind another in axial direction, the spring braces (8) that are arranged one behind another in axial direction being connected to one another by a common supporting ring (9).

8. A disc brake according to one of claims 5 to 7,
**characterised in that**
the internal diameter of a supporting ring (9) that is arranged between the spring braces (8) that are positioned one behind another in longitudinal direction is greater than the adjacent sliding bush (11), thereby forming a groove (12) to receive a lubricant.

9. A disc brake according to one of the preceding claims,
**characterised in that**
window openings (10) formed between the peripherally arranged spring braces (8) are filled with the plastic of the sliding bush (11).

10. A disc brake according to one of the preceding claims,
**characterised in that**
the spring sheath (7) is made in one piece as a stamped part.

11. A disc brake according to one of the preceding claims,
**characterised in that**
the spring sheath (7) is made of spring sheet metal.

## Revendications

1. Frein à disque d'un véhicule utilitaire, ayant un étrier (2) de frein, qui comprend un disque (3) de frein et qui, au moyen de deux éléments de fixation, dont l'un est constitué en palier (4) fixe et l'autre en palier (5) libre, est fixé sur un support (1) de frein fixe, avec possibilité de se déplacer axialement par rapport au disque (3) de frein, le palier (5) libre ayant un manchon (6) de guidage, maintenu fixement dans l'étrier (2) de frein et ayant un manchon (11) de glissement en une matière plastique, notamment en un élastomère, dans lequel un bras de guidage, relié au support (1) de frein, est guidé avec possibilité de se déplacer longitudinalement,
**caractérisé en ce que**
dans le manchon (11) de glissement, est maintenue une douille (7) à ressort, qui a des arceaux (8) à ressort s'étendant dans la direction de l'axe longitudinal et disposés à distance les uns des autres sur le pourtour, qui sont en contact avec le bras de guidage.

2. Frein à disque suivant la revendication 1,
**caractérisé en ce que**
le manchon (11) de glissement est moulé par injection sur la douille (7) à ressort.

3. Frein à disque suivant la revendication 1 ou 2,
**caractérisé en ce que**
les arceaux (8) à ressort peuvent être déviés librement radialement.

4. Frein à disque suivant l'une des revendications précédentes,
**caractérisé en ce que**
les arceaux (8) à ressort sont convexes du côté tourné vers le bras de guidage.

5. Frein à disque suivant l'une des revendications précédentes,
**caractérisé en ce que**
les arceaux (8) à ressort sont raccordés à leurs deux extrémités à, respectivement, un anneau (9) d'appui.

6. Frein à disque suivant la revendication 5,
**caractérisé en ce que**
l'anneau (9) d'appui correspond, dans son diamètre extérieur, au diamètre extérieur du manchon (11) de glissement ou est légèrement plus grand.

7. Frein à disque suivant la revendication 1 ou 5,
**caractérisé en ce que**
la douille (7) à ressort est constituée de plusieurs arceaux (8) à ressort, répartis sur le pourtour et disposés les uns derrière les autres dans la direction axiale, les arceaux (8) à ressort, disposés les uns derrière les autres dans la direction axiale, étant reliés entre eux par un anneau (9) d'appui commun.

8. Frein à disque suivant l'une des revendications 5 à 7,
**caractérisé en ce que**
le diamètre intérieur d'un anneau (9) d'appui, disposé entre les arceaux (8) à ressort se trouvant les uns derrière les autres dans la direction longitudinale, est plus grand que le manchon (11) de glissement voisin, en formant une rainure (12) de réception d'un lubrifiant.

9. Frein à disque suivant l'une des revendications précédents,
**caractérisé en ce que**
des ouvertures (10) de fenêtre, constituées entre les arceaux (8) à ressort disposés sur le pourtour, sont remplies de la matière plastique du manchon (11) de glissement.

10. Frein à disque suivant l'une des revendications précédentes,
**caractérisé en ce que**
la douille (7) à ressort est constituée d'une pièce sous la forme d'une pièce découpée.

11. Frein à disque suivant l'une des revendications précédents,
**caractérisé en ce que**
la douille (7) à ressort est constituée d'une tôle pour ressort.
